# EUROPÄISCHE PATENTANMELDUNG

(11) **EP 1 088 786 A1**
(43) Veröffentlichungstag der Anmeldung: **04.04.2001**
(21) Anmeldenummer: 00119483.6
(22) Anmeldetag: 18.09.2000
(51) Int. Cl.: C01B 3/38

(54) **Kraftstoffreformer und Verfahren zum Reformieren**

(30) Priorität: 01.10.1999 DE 19947312
(71) Anmelder: Volkswagen Aktiengesellschaft, 38436 Wolfsburg (DE)
(72) Erfinder: König, Axel Dr., 38448 Wolfsburg (DE)

(57) **Zusammenfassung**

Die Erfindung betrifft ein Verfahren zum Reformieren von Wasserstoff aus einem Energieträger und Luft in einem Reformer. Hierbei werden der Energieträger und die Luft gemeinsam als Gemisch mittels einer einzigen Zuführungsvorrichtung dem Reformer zugeführt.

## Beschreibung

Die Erfindung betrifft ein Verfahren zum Reformieren von Wasserstoff aus einem Energieträger und Luft in einem Reformer gemäß dem Oberbegriff des Anspruchs 1. Die Erfindung betrifft ferner einen Kraftstoffreformer, insbesondere für eine Brennstoffzelle eines Kraftfahrzeuges, zum Gewinnen von Wasserstoff aus einem Energieträger und Luft mit einem Reformervolumen gemäß dem Oberbegriff des Anspruchs 6. Die Erfindung betrifft ferner ein Brennstoffzellensystem, insbesondere als Antriebssystem eines Kraftfahrzeuges, mit einer Reformereinheit zum Erzeugen von Wasserstoff aus einem Energieträger und Luft zum Betreiben einer nachgeschalteten Brennstoffzelleneinheit gemäß dem Oberbegriff des Anspruchs 11.

Brennstoffzellen mit protonenleitenden Membranen, wie sie beispielsweise als Antrieb in einem Kraftfahrzeug Verwendung finden, benötigen Wasserstoff als Kraftstoff. Da Wasserstoff am Bord eines Fahrzeuges schlecht mitzuführen ist, wird dieser an Bord mittels eines Reformers aus flüssigem Kraftstoff hergestellt. Die Gewinnung von Wasserstoff in einem Reformierungsprozeß basiert beispielsweise auf flüssigem Methanol (CH₃OH), wobei das Methanol unter Zuführung von Luft und ggf. Wasser zu Kohlendioxid (CO₂) und Wasserstoff umgesetzt wird. Der dabei entstehende Gasstrom wird in die Brennstoffzelle geführt und der Wasserstoff an einem Katalysator ionisiert. Das Kohlendioxid hat als sogenanntes Inertgas nahezu keinen Einfluß auf die Eigenschaften der Brennstoffzelle. Das auf einer Kathodenseite entstehende Wasser wird in Form von Wasserdampf an die Umgebung abgegeben.

Kraftstoffreformer, welche nach dem Prozeß der partiellen Oxidation arbeiten, können als Betriebsmittel Kraftstoff, wie beispielsweise Benzin, Dieselkraftstoff oder Methanol, nutzen und benötigen zusätzlich Luft. Kraftstoffreformer, welche nach dem Prinzip der autothermen Reformierung arbeiten benötigen als Betriebsmittel Kraftstoff, Wasser und Luft. Bei herkömmlichen Kraftstoffreformern, wie aus der US 5 733 347 bekannt, werden die Betriebsmittel Kraftstoff und Luft dem Reformer getrennt zugeführt und deren Mengenströme werden durch separate Steuer- und Regelkreise dem Bedarf entsprechend eingestellt. Die getrennte Zuführung verursacht jedoch erhöhte Kosten, erhöhten Bauteilaufwand sowie erhöhten Platzbedarf.

Der vorliegenden Erfindung liegt daher die Aufgabe zugrunde, ein verbessertes Verfahren, einen verbesserten Kraftstoffreformer und ein verbessertes Brennstoffzellensystem jeweils der obengenannten Art zur Verfügung zu stellen, wobei die obengenannten Nachteile überwunden werden und eine einfachere, betriebssichere und kostengünstige Gewinnung von Wasserstoff erzielt wird.

Diese Aufgabe wird erfindungsgemäß durch ein Verfahren der o.g. Art mit den in Anspruch 1 gekennzeichneten Merkmalen, durch einen Kraftstoffreformer der o.g. Art mit den in Anspruch 6 gekennzeichneten Merkmalen und durch ein Brennstoffzellensystem der o.g. Art mit den in Anspruch 11 gekennzeichneten Merkmalen gelöst. Vorteilhafte Ausgestaltungen der Erfindung sind in den jeweils abhängigen Ansprüchen angegeben.

Dazu ist es bei einem Verfahren der o.g. Art erfindungsgemäß vorgesehen, daß der Energieträger und die Luft gemeinsam als Gemisch mittels einer einzigen Zuführungsvorrichtung dem Reformer zugeführt werden.

Dies hat den Vorteil, daß ein vereinfachtes und kostengünstigeres Verfahren zum Gewinnen von Wasserstoff in einem Reformerprozeß zur Verfügung steht, wobei sich überraschenderweise trotz der gemeinsamen Zuführung der Massenströme von Energieträger und Luft eine verbesserte Energieträgeraufbereitung und Regelgüte ergibt.

Zweckmäßigerweise ist der Energieträger Alkohol, insbesondere Methanol oder ein Kohlenwasserstoffgemisch. Die Zuführungsvorrichtung ist beispielsweise eine Einspritzvorrichtung.

Eine weitere Vereinfachung des Verfahrens erzielt man dadurch, daß zusätzlich gemeinsam mit dem Gemisch aus Energieträger und Luft das Wasser mit der einzigen Einspritzvorrichtung in den Reformer zugeführt wird.

In einer bevorzugten Ausführungsform wird zum Reformieren ein Prozeß mit partieller Oxidation von Kohlenwasserstoffen oder Alkoholen, eine autotherme Reformierung von Kohlenwasserstoffen oder Alkoholen, eine autotherme Reformierung von mit Wasser mischbaren Kraftstoffen oder eine autotherme Reformierung von mit Wasser nicht homogen mischbaren Kraftstoffen durchgeführt.

Ferner ist es bei einem Kraftstoffreformer der o.g. Art erfindungsgemäß vorgesehen, daß eine Zuführungsvorrichtung zum gemeinsamen Zuführen des Energieträgers und der Luft in das Reformervolumen vorgesehen ist.

Dies hat den Vorteil, daß ein vereinfachter und kostengünstigerer Kraftstoffreformer zum Gewinnen von Wasserstoff in einem Reformerprozeß zur Verfügung steht, wobei sich überraschenderweise trotz der gemeinsamen Zuführung der Massenströme von Energieträger und Luft eine verbesserte Energieträgeraufbereitung und Regelgüte ergibt.

Zweckmäßigerweise ist der Energieträger Alkohol, insbesondere Methanol oder ein Kohlenwasserstoffgemisch. Die Zuführungsvorrichtung ist beispielsweise als Einspritzvorrichtung ausgebildet.

Eine weitere Vereinfachung des Kraftstoffreformers erzielt man dadurch, daß die Einspritzvorrichtung derart ausgebildet ist, daß sie gemeinsam mit dem Energieträger und der Luft auch das Wasser in das Reformervolumen einspritzt.

In einer bevorzugten Ausführungsform ist der Kraftstoffreformer zum Ausführen eines Prozesses mit partieller Oxidation von Kohlenwasserstoffen oder Alkoholen, mit autothermer Reformierung von Kohlenwasserstoffen oder Alkoholen, mit autothermer Reformierung von mit Wasser mischbaren Kraftstoffen oder mit autothermer Reformierung von mit Wasser nicht homogen mischbaren Kraftstoffen ausgebildet.

Ferner ist es bei einem Brennstoffzellensystem der o.g. Art erfindungsgemäß vorgesehen, daß die Reformereinheit eine Zuführungsvorrichtung aufweist, welche zum gleichzeitigen Zuführen des Energieträgers mit Luft als Gemisch an die Reformereinheit ausgebildet ist.

Dies hat den Vorteil, daß ein Brennstoffzellensystem mit vereinfachter und kostengünstigerer Gewinnung von Wasserstoff in einem Reformerprozeß zur Verfügung steht, wobei sich überraschenderweise trotz der gemeinsamen Zuführung der Massenströme von Energieträger und Luft eine verbesserte Energieträgeraufbereitung und Regelgüte ergibt.

Zweckmäßigerweise ist der Energieträger Alkohol, insbesondere Methanol oder ein Kohlenwasserstoffgemisch. Die Zuführungsvorrichtung ist beispielsweise als Einspritzvorrichtung ausgebildet.

Eine weitere Vereinfachung des Kraftstoffreformers erzielt man dadurch, daß die Zuführvorrichtung derart ausgebildet ist, daß sie gemeinsam mit dem Energieträger und der Luft auch das Wasser an die Reformereinheit zuführt.

In einer bevorzugten Ausführungsform ist die Reformereinheit zum Ausführen eines Prozesses mit partieller Oxidation von Kohlenwasserstoffen oder Alkoholen, mit autothermer Reformierung von Kohlenwasserstoffen oder Alkoholen, mit autothermer Reformierung von mit Wasser mischbaren Kraftstoffen oder mit autothermer Reformierung von mit Wasser nicht homogen mischbaren Kraftstoffen ausgebildet.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine erste bevorzugte Ausführungsform eines erfindungsgemäßen Reformers,
- Fig. 2: eine zweite bevorzugte Ausführungsform eines erfindungsgemäßen Reformers,
- Fig. 3: eine dritte bevorzugte Ausführungsform eines erfindungsgemäßen Reformers und
- Fig. 4: eine vierte bevorzugte Ausführungsform eines erfindungsgemäßen Reformers

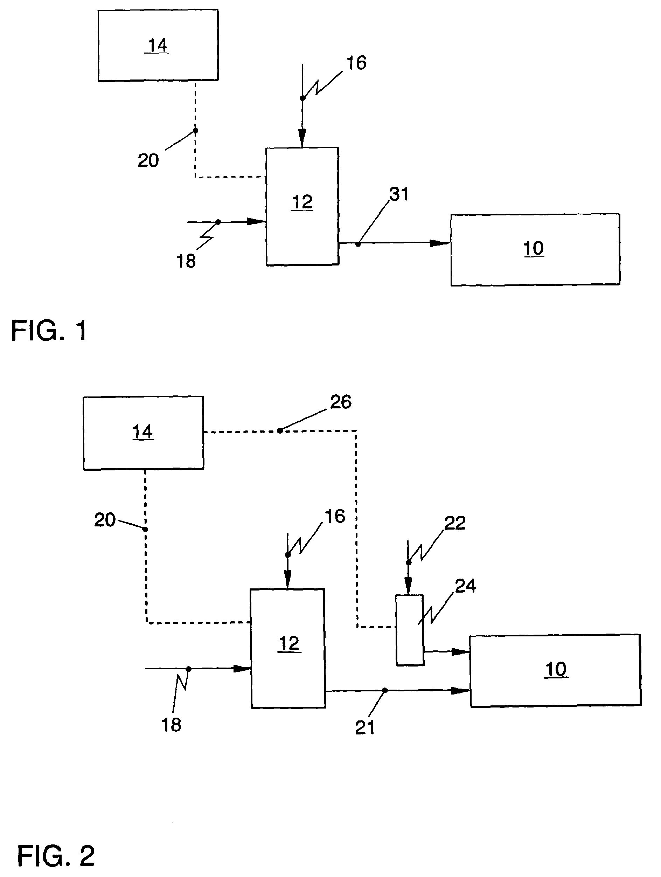

In den Fig. sind jeweils gleiche Teile mit gleichen Bezugsziffern gekennzeichnet, so daß deren Beschreibung nur einmal bzgl. Fig. 1 erfolgt und für alle Ausführungsformen gleichermaßen gilt.

Die in Fig. 1 dargestellte erste bevorzugte Ausführungsform eines erfindungsgemäßen Reformers umfaßt ein Reformervolumen 10, in dem eine katalytische Umwandlung eines Energieträgers, wie beispielsweise Methanol, zu Wasserstoff erfolgt, sowie eine Zuführungsvorrichtung in Form eines Injektors 12 und ein Steuergerät 14. Dem Injektor 12 werden Kohlenwasserstoffe oder Alkohole als Energieträger 16 sowie Luft 18 zugeführt. Über eine Steuerleitung 20 steuert das Steuergerät 14 den Injektor 12 derart an, daß dieser dem Reformervolumen 10 ein Gemisch 21 aus Energieträger 16 und Luft 18 einspritzt. Hierbei arbeitet das Reformervolumen 10 nach dem Prinzip der partiellen Oxidation von Kohlenwasserstoffen oder Alkoholen 16. Energieträger 16 und Luft 18 werden dem Reformervolumen 10 von dem Injektor 12 in einer Menge und einem Verhältnis zugeführt, welches jeweiligen Bedürfnissen von einer nicht dargestellten Brennstoffzelle bzgl. Leistungsanforderung und dem Reformer bzgl. Temperatur bzw. Sonderbetrieb, wie beispielsweise Start, entspricht. Erfindungsgemäß ist hierbei nur eine einzige Zufuhr für den Energieträger 16 und Luft 18 an das Reformervolumen vorgesehen. Der Injektor 12 ist dabei wie ein Einspitzsystem ausgebildet und bietet die Vorteile einer Reduzierung von Bauteilanzahl, Kosten sowie Bauraum.

Die in Fig. 2 dargestellte zweite bevorzugte Ausführungsform eines erfindungsgemäßen Reformers arbeitet nach dem Prinzip einer autothermen Reformierung von Kohlenwasserstoffen oder Alkoholen mit getrennter Zuführung von Wasser 22. Hierzu ist ein separater zweiter Injektor 24 vorgesehen, welcher ebenfalls von dem Steuergerät 14 über eine Steuerleitung 26 angesteuert wird. Ggf. ist ein separates Steuergerät für den zweiten Injektor 24 vorgesehen. Das Steuergerät 14 steuert die Mengen und Verhältnisse von Kraftstoff/Luft/Wasser in Abhängigkeit von Betriebsparametern von Brennstoffzelle und Reformer.

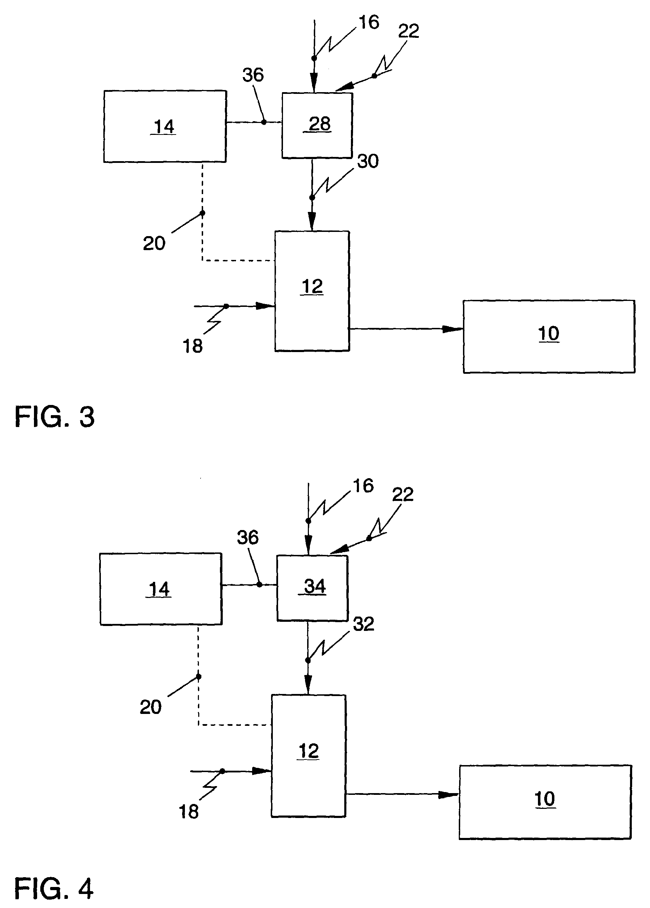

Bei den in Fig. 3 und 4 dargestellten Weiterbildungen ist der Injektor 12 auch zum gleichzeitigen Zuführen von Wasser 22 zusammen mit dem Gemisch aus Energieträger 16 und Luft 18 ausgebildet. Hierbei arbeitet der Reformer gemäß Fig. 3 nach dem Prinzip einer autothermen Reformierung von mit Wasser 22 mischbaren Kraftstoffen 16. In einer Mischkammer 28 werden der Kraftstoff 16, wie beispielsweise Alkohole, mit Wasser 22 vorgemischt und danach erfolgt eine Zumischung von Luft 18 in den Injektor 12. Dieser erhält von der Mischkammer 28 ein Gemisch 30 aus Kraftstoff 16 und Wasser 22.

Bei der Ausführungsform gemäß Fig. 4 erfolgt dagegen eine autotherme Reformierung von mit Wasser 22 nicht homogen mischbaren Kraftstoffen 16, wobei in einer Emulgierungskammer 34 eine Suspension 32 aus Energieträger 16 und Wasser 18 gebildet und an den Injektor 12 weiter gegeben wird.

Sowohl die Mischkammer 28 als auch die Emulgierungskammer 34 werden vom Steuergerät 14 über eine jeweilige Steuerleitung 36 derart angesteuert, daß sich entsprechende Mengen und Mengenverhältnisse von Kraftstoff/Wasser/Luft einstellen.

### BEZUGSZEICHENLISTE

- 10: Reformervolumen
- 12: Zuführungsvorrichtung / Injektor
- 14: Steuergerät
- 16: Energieträger (Kohlenwasserstoffe, Alkohole, Benzin)
- 18: Luft
- 20: Steuerleitung
- 21: Gemisch aus Energieträger 16 und Luft 18
- 22: Wasser
- 24: zweiter Injektor für Wassert
- 26: Steuerleitung
- 28: Mischkammer
- 30: Gemisch aus Kraftstoff 16 und Wasser 22
- 32: Suspension
- 34: Emulgierungskammer
- 36: Steuerleitung

## Patentansprüche

1. Verfahren zum Reformieren von Wasserstoff aus einem Energieträger und Luft in einem Reformer, **dadurch gekennzeichnet**, daß der Energieträger und die Luft gemeinsam als Gemisch mittels einer einzigen Zuführungsvorrichtung dem Reformer zugeführt werden.

2. Verfahren nach Anspruch 1, **dadurch gekennzeichnet**, daß der Energieträger Alkohol, insbesondere Methanol oder ein Kohlenwasserstoffgemisch ist.

3. Verfahren nach Anspruch 1 oder 2, **dadurch gekennzeichnet**, daß zusätzlich gemeinsam mit dem Gemisch aus Energieträger und Luft Wasser mit der einzigen Einspritzvorrichtung in den Reformer zugeführt wird.

4. Verfahren nach einem der vorhergehenden Ansprüche, **dadurch gekennzeichnet**, daß zum Reformieren ein Prozeß mit partieller Oxidation von Kohlenwasserstoffen oder Alkoholen, eine autotherme Reformierung von Kohlenwasserstoffen oder Alkoholen, eine autotherme Reformierung von mit Wasser mischbaren Kraftstoffen oder eine autotherme Reformierung von mit Wasser nicht homogen mischbaren Kraftstoffen durchgeführt wird.

5. Verfahren nach einem der vorhergehenden Ansprüche, **dadurch gekennzeichnet**, daß die Zuführungsvorrichtung eine Einspritzvorrichtung ist.

6. Kraftstoffreformer, insbesondere für eine Brennstoffzelle eines Kraftfahrzeuges, zum Gewinnen von Wasserstoff aus einem Energieträger (16) und Luft (18) mit einem Reformervolumen (10), **dadurch gekennzeichnet**, daß eine Zuführungsvorrichtung (12) zum gemeinsamen Zuführen des Energieträgers (16) und der Luft (18) in das Reformervolumen (10) vorgesehen ist.

7. Kraftstoffreformer nach Anspruch 6, **dadurch gekennzeichnet**, daß der Energieträger (16) Alkohol, insbesondere Methanol oder ein Kohlenwasserstoffgemisch ist.

8. Kraftstoffreformer nach Anspruch 6 oder 7, **dadurch gekennzeichnet**, daß die Zuführvorrichtung (12) derart ausgebildet ist, daß sie gemeinsam mit dem Energieträger (16) und der Luft (18) auch Wasser (22) an das Reformervolumen (10) zuführt.

9. Kraftstoffreformer nach einem der Ansprüche 6 bis 8, **dadurch gekennzeichnet**, daß dieser zum Ausführen eines Prozesses mit partieller Oxidation von Kohlenwasserstoffen oder Alkoholen, mit autothermer Reformierung von Kohlenwasserstoffen oder Alkoholen, mit autothermer Reformierung von mit Wasser mischbaren Kraftstoffen oder mit autothermer Reformierung von mit Wasser nicht homogen mischbaren Kraftstoffen ausgebildet ist.

10. Kraftstoffreformer nach einem der Ansprüche 6 bis 9, **dadurch gekennzeichnet**, daß die Zuführungsvorrichtung (12) als Einspritzvorrichtung ausgebildet ist.

11. Brennstoffzellensystem, insbesondere als Antriebssystem eines Kraftfahrzeuges, mit einer Reformereinheit (10) zum Erzeugen von Wasserstoff aus einem Energieträger (16) und Luft (18) zum Betreiben einer nachgeschalteten Brennstoffzelleneinheit, **dadurch gekennzeichnet**, daß die Reformereinheit (10) eine Zuführungsvorrichtung (12) aufweist, welche zum gleichzeitigen Zuführen des Energieträgers (16) mit Luft (18) als Gemisch (21) an die Reformereinheit (10) ausgebildet ist.

12. Brennstoffzellensystem nach Anspruch 11, **dadurch gekennzeichnet**, daß der Energieträger (16) Alkohol, insbesondere Methanol oder ein Kohlenwasserstoffgemisch ist.

13. Brennstoffzellensystem nach Anspruch 11 oder 12, **dadurch gekennzeichnet**, daß die Zuführvorrichtung (12) derart ausgebildet ist, daß sie gemeinsam mit dem Energieträger (16) und der Luft (18) auch Wasser (18) an die Reformereinheit (10) zuführt.

14. Brennstoffzellensystem einem der Ansprüche 11 bis 13, **dadurch gekennzeichnet**, daß die Reformereinheit (10) zum Ausführen eines Prozesses mit partieller Oxidation von Kohlenwasserstoffen oder Alkoholen, mit autothermer Reformierung von Kohlenwasserstoffen oder Alkoholen, mit autothermer Reformierung von mit Wasser mischbaren Kraftstoffen oder mit autothermer Reformierung von mit Wasser nicht homogen mischbaren Kraftstoffen ausgebildet ist.

15. Brennstoffzellensystem nach einem der Ansprüche 11 bis 14, **dadurch gekennzeichnet**, daß die Zuführungsvorrichtung (12) als Einspritzvorrichtung ausgebildet ist.
